Europäisches Patentamt

European Patent Office

Office européen des brevets

(11) Publication number:　　　**0 162 317**
**B1**

(12)　　　EUROPEAN PATENT SPECIFICATION

(45) Date of publication of patent specification: **17.10.90**

(51) Int. Cl.⁵: **H 02 K 15/06, H 02 K 3/12**

(21) Application number: **85104938.7**

(22) Date of filing: **23.04.85**

(54) Armatures and method for manufacturing such armatures.

(30) Priority: **23.04.84 JP 82758/84**

(43) Date of publication of application:
**27.11.85 Bulletin 85/48**

(45) Publication of the grant of the patent:
**17.10.90 Bulletin 90/42**

(84) Designated Contracting States:
**DE FR GB IT**

(56) References cited:
**AT-B- 23 510**
**DD-A- 105 948**
**DE-C- 452 730**
**GB-A- 1 031 669**

**PATENT ABSTRACTS OF JAPAN, vol. 7, no. 154**
**(E-185)1299r, 6th July 1983; & JP - A - 58 63066**

(73) Proprietor: **NIPPONDENSO CO., LTD.**
**1-1, Showa-cho**
**Kariya-shi Aichi-ken (JP)**

(72) Inventor: **Ohmi, Masanori**
**50, Agatagi Anjo-cho**
**Anjo-shi Aichi-ken (JP)**
Inventor: **Maekawa, Tsutomu**
**12-7, Hachiman Yoshihama-cho**
**Takahama-shi Aichi-ken (JP)**
Inventor: **Hamano, Satoru**
**5-211, Miyuki-cho**
**Kariya-shi Aichi-ken (JP)**
Inventor: **Mori, Masanori**
**217-4, Aza Minamitani Shinpukuji-cho**
**Okazaki-shi Aichi-ken (JP)**
Inventor: **Uzura, Shogo**
**3-3-17, Jonan-cho**
**Okazaki-shi Aichi-ken (JP)**

(74) Representative: **Klingseisen, Franz, Dipl.-Ing.**
**et al**
**Dr. F. Zumstein sen. Dr. E. Assmann Dr. R.**
**Koenigsberger Dr. F. Zumstein jun. Dipl.-Ing. F.**
**Klingseisen Bräuhausstrasse 4**
**D-8000 München 2 (DE)**

## Description

The invention relates to an armature of a motor according to the preamble of claim 1 as well as to a method for manufacturing the same according to the preamble of claim 4.

In one, of the conventional armatures, or of the conventional manufacturing methods of the same, first, a straight conductive wire having a predetermined length is eccentrically bent at a nearly center position of the wire so that the bent wire is of a pine-needle shape having a bent portion and a first and a second straight portion, the first and second portions being extending almost parallel each other but extending away at a small degree angle. Then, a necessary number of such wires are inserted into the corresponding number of slots of an apparatus comprising an external rotational cylindrical jig and an internal cylindrical jig for setting the bent wires and for locating them for the prescribed slot positions, where the slots are spaced equally round both the inner circumference of the external rotational cylindrical jig and the outer circumference of the internal cylindrical jig. Therefore, the bent wires are so radically disposed that the bent portions of the wires project above the flat surfaces of the external and internal cylindrical jigs. In this condition, the height of the bent portions of the inserted wires are regulated by a jig of the apparatus in order to prevent the bent wires from moving in the longitudinal direction of the bent wires. After this, an appropriate relative rotational motion is applied between the external and internal jigs to form an integrated coil body. Then, the integrated coil body is pulled out from the jigs and is inserted into slots of an armature to assemble a motor. However, a motor using the above described conventional integrated coil body has a deficiency that by the relative rotational motion, the bent portions are transformed into chevron shape and protrude above one end surface of the armature, thus causing a relatively large-size motor, especially in the axial direction.

JP—A—58 63 066 describes an armature coil which is flattened at the region projecting from the through hole of a core to shorten the length of a rotary shaft and to achieve compactness and light weight.

Further DD—A—105 948 discloses a method for manufacturing an armature coil according to which prebent coil elements are inserted into slots of a core, whereupon the radially projecting parts of the coil elements are pressed and bent radially inwardly.

It is the object of the invention to provide an armature of the above-mentioned kind in such a way that the armature has necessary minimum height end portions of an integrated coil body projecting above one side of the armature core opposite to the other side, on which a commutator is installed, which armature has good characteristics for the effects of improved air resistance and minimized centrifugal force. A further object is to provide a manufacturing method for an armature having the afore-mentioned features.

This object is achieved according to the invention by the features in the characterizing part of claim 1 and claim 4.

Brief Description of the Drawings

Fig. 1 is a front view showing details of a jig to form a coil wire of pine-needle shape according to the invention;

Fig. 2 is a front view showing details of an apparatus which forms an integrated armature coil body according to the invention;

Fig. 3 is a view, partially in cross-section, of a portion of the apparatus of Fig. 2;

Figs, 4(a), 4(b), 4(c) and 4(d) are partial front views explaining stages of formation of the integrated armature coil body;

Fig. 5(b) is a plan view of Fig. 5(a);

Fig. 6 is a plan view similar to that of Fig. 4(d) and illustrates the Archemedes' spiral of the coil wires,

Fig. 7 is a front view of an armature core;

Fig. 8 is a perspective side view showing details of an armature according to this invention;

Fig. 9 is a front view of the armature according to this invention; and

Fig. 10 is a vertical sectional view of an important part of this invention.

Detailed Description of Preferred Drawings An embodiment of this invention will now be described hereinafter in detail with reference to the accompanying drawings.

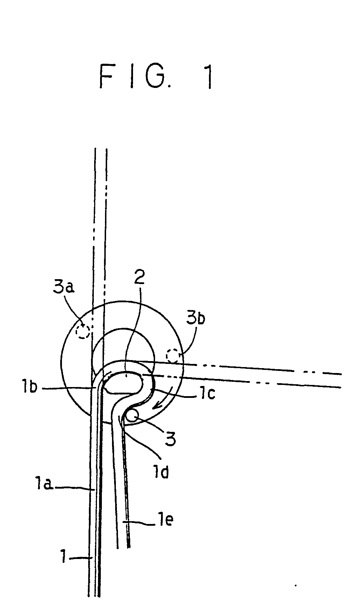

As shown in Fig. 1, a single straight conductive wire 1 at one end fixed to a jig (not shown) is bent in almost center against a peripheral portion of a bend shaft 2 by rotating a pin 3 in the direction of an arrow (from position 3a to position 3). In this case, the rotational centre of the pin 3 does not correspond to the center of the bend shaft 2. Bending the conductive wire in the above prescribed method forms a conductive wire of pine-needle shape having a first straight portion being an outboard wire 1a, a first bent portion 1b bent at right angle to the outboard wire 1a, an "U" letter shape portion 1c extending from the bent portion 1b, a second bent portion 1d connected to the other end of the "U" letter shape portion 1c and being bent at right angle to the axial direction of the outboard wire 1a, and a second straight portion being an inboard wire 1e extending from the bent portion 1d. And as shown in Fig. 1, the outboard wire 1a and the inboard wire 1e both are opposing each other while extending away at an adequate amount of degree angle.

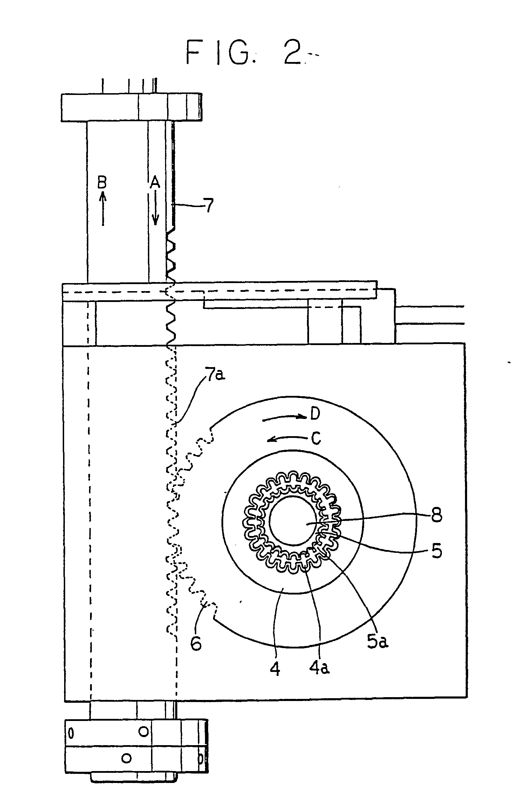

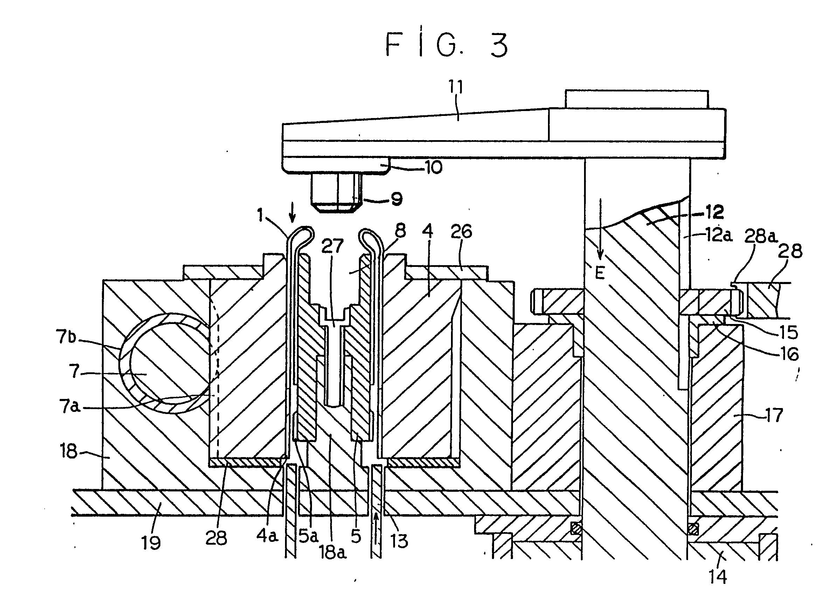

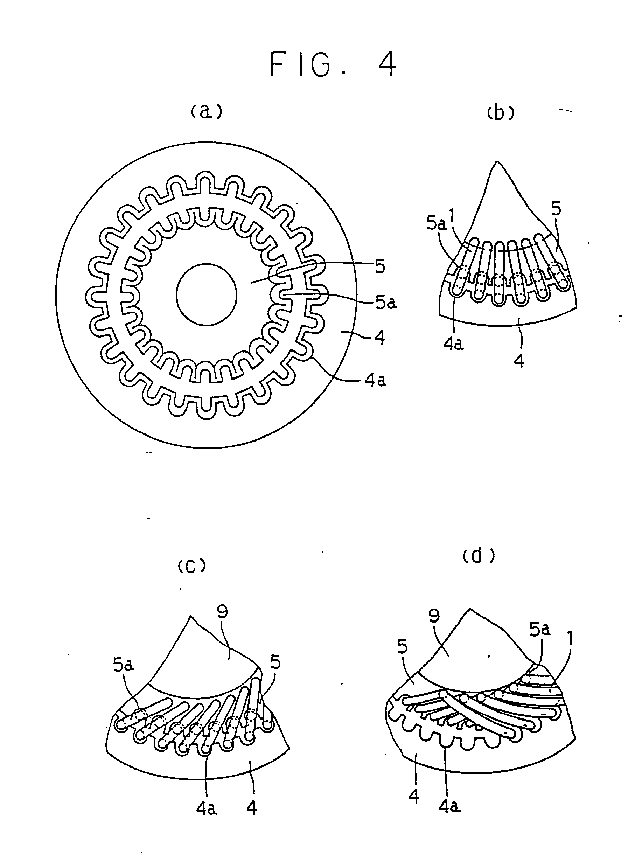

An integrated armature coil body forming apparating, as shown in Figs. 2 and 3, comprises a first housing 18 having a hollow portion throughout its axial length, extending through the upper side to the lower side in the embodiment, at the centre of the lower side of which is provided a projection 18a extending throughout the hollow portion toward the upper side. The forming apparatus also comprises a second housing 17 one side, the left side in the embodiment, of which is fitted to the first housing 18 and is secured to a base 19 by adequate means as the first housing 18 secured to it. In the hollow portion is rotatably disposed a cylindrical jig 4 for twisting the conductive wire 1 by a predetermined amount of twist, through a bearing means 28, which has a plurality of semi-circular slots, twenty-three slots in the embodiment as shown by Fig. 4(a), spaced equally round the inner circumference. The jig 4 is prevented from moving in the axial direction by a holding fixture 26 secured to the first housing 18 by means of bolts and nuts and the like.

For twisting the inboard wires 1e by a certain amount of twist another cylindrical hollow jig 5 is positioned in the hollow space of the jig 4, which has the corresponding number of semi-circular slots 5a spaced equally round the outer circumference while facing to the semi-circular slots 4a of the jig 4 as shown in Fig. 4(a). The cylindrical hollow jig 5 has an axial bore 8 throughout its axial length and is secured to the projection 18a by means of a screw 27 and the like threadingly engaged through the bore 8 in the jig 5 with the projection 18a. The jig 4 has a gear portion 6 (Fig. 2) on its curved surface, which meshes a gear portion 7a of a rack 7 movably supported through a bearing means 7b with the first housing 18 in the both directions as shown by arrows A and B (Fig. 2). Fig. 2 shows that movement of the rack 7 in direction A is to rotate the jig 4 in the counterclockwise direction (arrow C) and the reverse movement is to rotate it in the clockwise direction (arrow D). At both the bottom side of the hollow portion of the first housing 18 and the base 19 are provided a plurality of holes throughout them, twenty-three holes in the embodiment, and which are so radially positioned in accordance with the corresponding number of holes formed by the slots 4a and slots 5a at the faying surfaces of the jig 4 and the jig 5 that there are formed communicating passages therethrough. An extrusion member 13 can be moved in its axial direction, up and down in Fig. 3, under air pressure so that its pin portions move up and down in the communicating passages.

A rod 12 is movably disposed in the second housing 17, one end of which is secured to a cylinder 14 so that the rod 12 can move downward (direction E) by applying pressure to the cylinder. The rod 12 has serrated portions 12a to which a gear member 15 is connected in order to rotate the rod 12 in direction either toward the paper or from the paper toward the reader in the drawing. A "L"-letter shape bearing member 16 is provided between the gear member 15 and the top edge portion of the first housing 17 to thereby easily rotate the gear member 15 which is, however, prevented from moving in its axial direction by a flange portion 28a of a gear 28 which forms a gear train together with the gear member 15. To the other end of the rod 12 is secured a supporting arm 11 extending parallel to and toward the upper surface of the first housing 18. A coil supporting jig 10 is provided on the extending side of the supporting arm 11, and to which a columnar core bar 9 is secured. In this case, the columnar cord bar 9 is disposed to be in the circular orbit passing the center of the bore 8 while having a similar circular shape as the bore portion 8 does.

In operation, when inserting pin-needle shape conductive wires 1 into the holes formed by the slots 4a and 5a at the matching surfaces of the jig 4 and the jig 5, in consideration of the working, the supporting arm 11 is rotated 90 degrees from position shown in Fig. 3 either toward the paper or from the paper toward the reader by the gear train (the gears 15 and 28). As shown by Figs. 4(a), 4(b), 4(c) and 4(d), the outboard wires 1a of the pine-needle shape conductive wires of Fig. 1 are inserted into the slots 4a of the jig 4 and the inboard wires 1e of same are inserted into the slots 5a of the jig 5 by a wire inserting device, whereby the "U"-shape portion 1c of each wire is radially disposed inboard (Fig. 4(a)). Then, after the insertion of the wires 1, the supporting arm 11 is reversely rotated the same degree to position shown in Fig. 3.

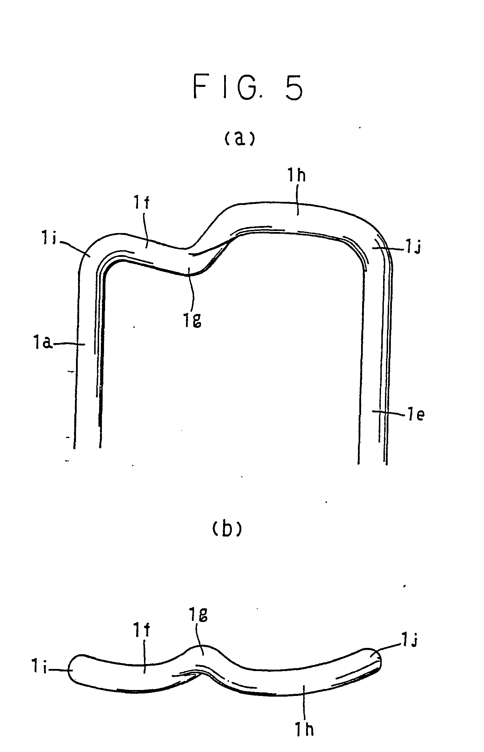

Thereafter, the jig 4 is rotated by the rack 7 in the clockwise direction (direction D) as viewed in Fig. 2 by an amount of half the distance between the neighboring slots against the jig 5, and the rotation of the jig 4 adjusts the diameter of the space defined by the curved portions 1c of the conductive wires 1 of Fig. 1 so that it becomes almost equal to the diameter of the bore 8 of the jig 5. Pressure is introduced to a chamber of the cylinder 14 and the rod 12 is moved downward (direction E), this causing the insertion of the columnar cored bar 9 into the bore 8. At this time, the innermost curved portions 1c of the wires 1, too, are adjacent to or almost in contact with the curved surfaces of the columnar cored bar 9 as shown by Fig. 4(c). In this condition, pressure of 550 to 600 kg is constantly supplied to the conduction wires 1 by the coil supporting jig 10 through the cylinder 14, the rod 12 and the supporting arm 11, while regulating by the cored bar 9 the innermost portions of the curved portions 1c of the conductive wires 1. Under this pressurized condition the jib 4 is rotated by the rack 7 in the counter-clockwise direction (direction C) as viewed in Fig. 2 by an amount of six and point eight times the distance between the neighboring slots against the jig 5 (Fig. 4(d)). As described above, since the innermost portions of the curved portions 1c of the conductive wires 1 are prevented from extending against the curved sufaces of the cored bar 9, the contact portion between them function as fulcrum so that a twisted portion 1g is formed as shown in Figs. 5(a) and 5(b). A first flat portion 1f and a second flat portion 1h are simultaneously formed with pressure supplied thereto. The first flat portion 1f and the second flat portion 1h are almost parallel to the top surface of the jigs 4 and 5, however, the first flat portion 1f is more adjacent, an amount of the diameter of the wire 1, to the surface than the

second flat portion 1h does as shown by Fig. 5(a). Therefore, it is clear in Fig. 4(d) that the first flat portion 1f and the second flat portion 1h of different conduction wires 1 are overlapped one upon another wherein the first flat portions 1f and the second flat portions 1h are annularly disposed on the same flat surfaces, respectively. Furthermore, a twist is given to each of bent portions 1i to 1j.

Finally, the jig 4 is rotated against the jig 5 again in the clockwise direction (direction D) as viewed in Fig. 2 by an amount of 0.3 times the distance between the neighbouring slots. This is provided for precluding possible spring back of the conductive wires 1. As the result, the first flat portion 1f extending toward the inboard wire 1e from the outboard wire 1a and the second flat portion 1h extending toward the outboard wire 1a from the inboard wire 1e are formed respectively in the Archemedes' spiral relationship.

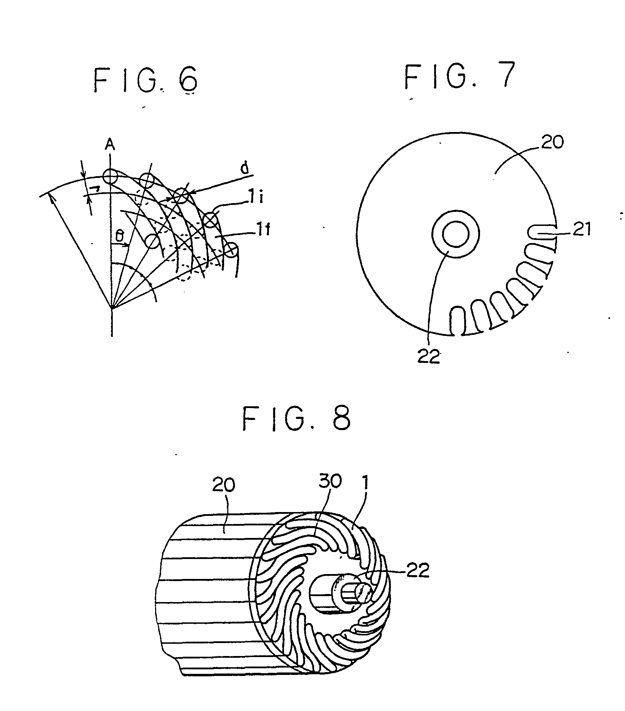

As shown by figs. 6 and 7, the Archimedes' spiral is determined as follows:

$$r = \frac{n \cdot d}{2\pi} \times \frac{\theta \cdot \pi}{180} = \frac{n \cdot d \cdot \theta}{360}$$

wherein, n is number of the slots 21 (Fig. 7) and d is the diameter of the conductive wire 1. In the embodiment, n is 23 (twenty-three slots) so that if $\theta$ is three hundreds and sixty over twenty three

$$( \frac{360}{23} ),$$

r is then calculated as follows:

$$r = \frac{23 \times d}{360} \times \frac{360}{23} = d$$

The calculated result means that the first flat portion 1f becomes closer to the centre of an armature core 20, the amount of the diameter of the conductive wire 1, for every three hundred and sixty over twenty three rotational degrees.

Thereafter, the supporting arm 11 is again rotated by the gear train (15, 28) through the rod 12, 90 degrees from position shown in Fig, 3, as described above, either toward the paper or from the paper toward the reader to facilitate removal of the integrated armature coil body formed in the coil-winding process described above. The extrusion member 13 is then moved upward (in direction F) by air pressure to take out the integrated armature coiled body 1 from the apparatus.

As shown in Figs. 7, 8 and 9, the outboard wires 1a and inboard wires 1e of the integrated armature coil body 1 are inserted into the slots 21 of the armature core 20 which are spaced equally round the circumference of the armature core 20, and which are throughout its axial length. Each slot 21 in the armature core 20 is applied with an insulating paper or insulation member for an insulation purpose at assembly. The armature core 20 has an armature shaft 22 on one end of which a commutator 24 is fixedly mounted. At this time, each of the outboard wires 1a and each of the inboard wires 1e extending through different slots 21 to the outside of the armature core 20 are connected each other on each segment of the commutator 24. Even after the insertion of the integrated armature coil body 1, the first and second flat portions 1f and 1h remain in the Archemedes' spiral relationship.

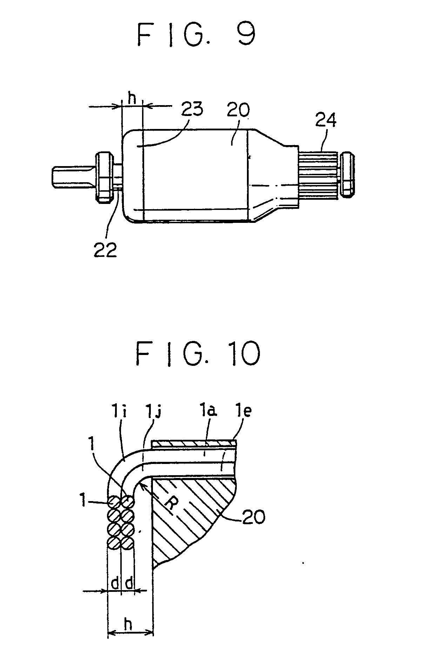

As shown in Figs. 9 and 10, the height h of a coil end 23 of the embodiment according to this invention can be found to be:

$$h \approx 2d + R$$

where d is the diameter of the conductive wire 1 and R is the radius of curvature of the bent portion 1j of that wire 1. According to our experimental results from actually manufacturing an armature, using an integrated armature coil body 1 prepared by the above-mentioned method, the height h of the coil end 23 of such armature was 9.5 mm. However, the height h of an armature provided with an integrated armature coil body prepared by one of the conventional methods was 16 mm, provided that the diameter d of the conductive wire 1 used in the experiments was 2.6 mm. As it is clear from the experimental results that according to the present invention the coil ends' height h can be reudced by almost half.

According to the invention, the integrated armature coil body 1 of an armature has first and second flat portions 1f and 1h and they are annualy disposed such that first flat portions 1f and second flat portions 1h of different conduction wires of the integrated armature coil body 1 are overlapped one upon another, thus it is possible to minimize the height h of the coil end 23, and manufacture a small and powerful armature with the improved centrifugal force strength.

And, according to the invention, the conductive wire 1 of pine-needle shape has the first and second straight portions 1a and 1e, and a first predetermined relative rotational motion on a concentric circle is applied in one direction between its first and second straight portions 1a and 1e while applying pressure over the bent portions, thereafter another second predetermined relative rotational motion is applied in the reverse direction, thus it is also possible to manufacture an armature having such integrated armature coil body 1 made by the steps described above.

It will be noted that the invention is not limited to the embodiment illustrated and described in the specifications, and various changes or modifications within the gist of the invention can easily be applied by those skilled in the art. For example, an even number of conductive wires more than two may be inserted into one of the slots of the armature core, the height of the coil end portion can be given by:

$$h \approx nd + R$$

where n is the number of conduction wires inserted into each slot.

## Claims

1. An armature of a motor comprising
an armature core (20) having a plurality of annularly disposed slots (21) throughout its axial length,
a rotatable shaft (22) disposed in the centre of said armature core (20),
a commutator (24) provided at one end portion of said armature core (20) and being fixedly mounted on said shaft (22), and
an integrated coil body (30) including a plurality of winding portions,
whereby each of said winding portions (30) comprises
a first straight portion (1a) connected at one end thereof to said commutator (24) and extending through one of said slots (21),
a second straight portion (1e) connected at one end thereof to said commutator (24) and extending through another of said slots (21), said first straight portion (1a) of one winding portion and said second straight portion of another winding portion being located together within the same slot (21) with said first straight portion (1a) of said one winding portion being located radially outward of said second straight portion (1e) of said another winding portion, characterized in that
a first flat portion (1f) is protruding outwardly from the other end of and extending substantially at right angles to said first straight portion (1a) toward said second straight portion (1e) and projecting beyond the other end of said armature core so that said first flat portion (1f) is adjacent to said other end of said armature core (20),
a second flat portion (1h) protruding outwardly from the other end of and extending substantially at right angles to said second straight portion (1e) toward said first straight portion (1a), and projecting beyond said other end of said armature core (20) in such a manner that the distance between said first flat portion (1f) and said other end of said armature core (20) is less than the distance between said second flat portion (1h) and said other end of said armature core (20), and
a twisted portion (1g) between said first and second flat portions (1f, 1h), whereby said first and second flat portions (1f, 1h) of different winding portions are overlapped one upon another, and said first and second flat portions (1f, 1h) of a plurality of said winding portions define a generally flat surface substantially parallel to said other end of said armature core (20).

2. An armature of a motor as claimed in claim 1, wherein said first flat portion (1f) is displaced from said second flat portion (1h) longitudinally of said core (20) a distance equal to about a diameter of the wiring of said winding portion.

3. An armature of a motor as claimed in claim 1, wherein said flat portions (1f, 1h) are arranged and disposed substantially in the Archimedes' spiral relationship respectively with respect to said shaft (22).

4. A method for manufacturing an armature of a motor which comprises
an armature core (20) having a plurality of annularly disposed slots (21) throughout its axial length;
a rotatable shaft (22) disposed in the center of said armature core (20);
a commutator (24) provided at one end portion of said armature core (20) and being fixedly mounted on said shaft (22); and
an integrated coil body (30) including a plurality of winding portions, whereby a straight conductive wire (1) is having a predetermed length is bent to thereby form a turn back portion and a first and a second straight portion (1a, 1e), said first and second straight portions (1a, 1e) extending away at a certain amount of degree angle;
characterized by
inserting said first and second straight portions (1a, 1e) of necessary number of said eccentrically bent conductive wires (1) into corresponding number of slots provided both with an external rotational cylindrical jig (4) and an internal cylindrical jig (5) disposed in said external jig (4) for locating them from the slot positions, whereby said conductive wires are radially disposed while the turn back portions of the conductive wires caused by the eccentrical bending work being disposed inward with respect to the center of the internal jig (5);
regulating the innermost edge portions of said turn back portions by inserting a member therein;
applying pressure to the top portion of said turn back portion of each said conductive wire (1);
thereafter, relative rotational motion between the external and internal cylindrical jigs (4, 5) being applied in one direction by a predetermined rotational angle in order to make an integrated coil body (30), whereby each of the turn back portions of the conductive wires (1) being transformed into a first substantially flat portion (1f) and a second substantially flat portion (1h) communicated with said first substantially flat portion (1f) via a twisted step portion (1g) therebetween, said first and second substantially flat portions (1f, 1h) of different conductive wires (1) being overlapped one upon another, said first and second flat portions (1f, 1h) being disposed substantially in the Archimedes' spiral relationship, respectively;
the, transferring said integrated coil body (30) from said external and internal jibs (4, 5) and inserting said first and second straight portions (1a, 1e) into a plurality of annualy disposed slots (21) throughout the axial length of an armature core (20), said first and second straight portions (1a, 1e) extending out of the armature core (20) being connected to the commutator (24).

5. A method as claimed in claim 4, further comprising the step of:
relative rotational motion being applied in the reverse direction by a rotational angle smaller than said predetermined rotational angle to thereby extend the radius of the space defined by the innermost edge portions of said turn back portions before regulating the innermost edge portions of said turn back portions.

6. A method as claimed in claim 4, wherein said predetermined rotational angle is obtained by said relative rotational motion comprising the steps of:

a first relative rotational motion being applied in one direction by a first rotational angle being applied in one direction by a first rotational angle being larger than said predetermined rotational angle, and

a second relative rotational motion being applied in the reverse direction by a second rotational angle which is the difference between said first rotational angle and said predetermined rotational angle.

**Patentansprüche**

1. Läufer eines Motors mit

einem Läuferkern (20) mit einer Anzahl von ringförmig angeordneten Schlitzen (21) über seine axiale Länge, einer drehbaren Welle (22) in der Mitte des Läuferkerns (20), einem Kommutator (24), der an einem Endabschnitt des Läuferkerns (20) vorgesehen und fest auf der Welle (22) angebracht ist, und

einem integrierten Wicklungskörper (30) mit einer Vielzahl von Wicklungsabschnitten, wobei jeder dieser Wicklungsabschnitte (30) amfaßt:

einen ersten geraden Abschnitt (1a), der mit einem Ende an den Kommutator (24) angeschlossen ist und sich durch

einen der Schlitze (21) erstreckt,

einen zweiten geraden Abschnitt (1e), der mit einem Ende an den Kommutator (24) angeschlossen ist und sich durch einen anderen Schlitz (21) erstreckt, wobei der erste gerade Abschnitt (1a) des einen Wicklungsabschnitts und der zweite gerade Anschnitt des anderen Wicklungsabschnitts zusammen in dem gleichen Schlitz (21) angeordnet sind und der erste gerade Abschnitt (1a) des einen Wicklungsabschnitts radial außen von dem zweiten geraden Abschnitt (1e) des anderen Wicklungsabschnitts angeordnet ist, dadurch gekennzeichnet,

daß ein erster flacher Abschnitt (1f) nach außen von dem anderen Ende des ersten geraden Abschnitts (1a) vorsteht und sich im wesentlichen im rechten Winkel zu dem ersten geraden Abschnitt (1a) erstreckt in Richtung auf den zweiten geraden Abschnitt (1e), wobei der flache Abschnitt über das andere Ende des Läuferkerns vorsteht, so daß dieser erste flach Abschnitt (1f) angrenzend an das andere Ende des Läuferkerns (20) angeordnet ist,

daß eine zweiter flacher Abschnitt (1h) von dem anderen Ende des zweiten geraden Abschnitts (1e) nach außen vorsteht und sich im wesentlichen im rechten Winkel zu dem zweiten geraden Abschnitt (1e) erstreckt in Richtung auf den ersten geraden Abschnitt (1a), wobei dieser zweite gerade Abschnitt über das andere Ende des Läuferkerns (20) in der Weise vorsteht, daß der Abstand zwischen dem ersten flachen Abschnitt (1f) und dem anderen Ende des Läuferkerns (20) geringer ist als der Abstand zwischen dem zweiten flachen Abschnitt (1h) und dem anderen Ende des Läuferkerns (20), und

daß ein verdrehter Abschnitt (1g) zwischen dem ersten und zweiten flachen Abschnitt (1f, 1h) vorhanden ist, wodurch die ersten und zweiten flachen Abschnitte (1f, 1h) von verschiedenen Wicklungsabschnitten einander überlappen und die ersten und zweiten flachen Abschnitte (1f, 1h) einer Vielzahl von Wicklungsabschnitten eine im allgemeinen flache Oberfläche im wesentlichen parallel zu dem anderen Ende des Läuferkerns (20) bilden.

2. Läufer eines Motors nach Anspruch 1, wobei der erste flache Abschnitt (1f) von dem zweiten flachen Abschnitt (1h) in Längsrichtung des Kerns (20) um einen Abstand versetzt ist, der etwa gleich einem Durchmesser des Drahtes des Wicklungsabschnitts ist.

3. Läufer eines Motors nach Anspruch 1, wobei die flachen Abschnitte (1f, 1h) im wesentlichen in der Form einer Archimedes-Spirale bezüglich der Welle (22) angeordnet sind.

4. Verfahren zum Herstellen eines Läufers für einen Motor, der einen Läuferkern (20) mit einer Anzahl von ringförmig angeordneten Schlitzen (21) über seine axiale Länge, eine drehbare Welle (22) in der Mitte des Läuferkerns (20), einen Kommutator (24), der an einem Endabschnitt des Läuferkerns (20) angeordnet und fest auf der Welle (22) angebracht ist, und einen integrierten Wicklungskörper (30) mit einer Vielzahl von Wicklungsabschnitten umfaßt, wobei ein gerader Leitungsdraht (1) von vorbestimmter Länge nahezu in der Mitte gebogen wird, um einen zurückgedrehten Abschnitt und einen ersten und zweiten geraden Abschnitt (1a, 1e) zu bilden, wobei sich die ersten und zweiten geraden Abschnitt (1a, 1e) um einen bestimmten Betrag eines Winkelgrades weg erstrecken, gekennzeichnet durch die Schritt des Einsetzens des ersten und zweiten geraden Abschnitts (1a, 1e) der erforderlichen Anzahl von exzentrischen gebogenen Leitungsdrähten (1) in eine entsprechende Anzahl von Schlitzen, die sowohl mit einem äußeren drehzylindrischen Einspannteil (4) und einem inneren zylindrischen Einspannteil (5) versehen sind, das in dem äußeren Einspannteil (4) zur Anordnung der Schlitzposition angeordnet ist, wobei die Leitungsdrähte radial angeordnet werden, während die zurückgedrehten Abschnitte der Leitungsdrähte durch das exzentrisch Verbiegen nach innen bezüglich der Mitte des inneren Einspannteils (5) angeordnet werden,

des Einstellens der innersten Randabschnitte der zurückgedrehten Abschnitte durch Einsetzen eines Teiles darin,

des Anlegens von Druck auf den oberen Abschnitt des zurückgedrehten Abschnitts jedes Leitungsdrahtes (1),

worauf eine relative Drehbewegung zwischen den äußeren und inneren zylindrischen Einspannteilen (4, 5) in eine Richtung um einen vorbestimmten Drehwinkel ausgeführt wird, um einen integrierten Wicklungskörper (30) herzustellen, wobei jeder der zurückgedrehten Abschnitte der Leitungsdrähte (1) in einen ersten im wesentlichen flachen Abschnitt (1f) und einen zweiten im wesentlichen flachen Abschnitt (1h) überführt wird, der mit dem ersten im wesentlichen flachen Abschnitt (1f) über einen verdrehten, stufenförmigen Abschnitt (1g) dazwischen in Verbindung steht, wobei sich die ersten und zweiten im wesentlichen flachen Abschnitte (1f, 1h) verschiedener Leitungsdrähte (1) einander überlappen und die ersten und zweiten flachen Abschnitte (1f, 1h) im wesentlichen in der Form einer Archimedes-Spirale jeweils angeordnet werden,

worauf dieser integrierte Wicklungskörper (30) aus den äußeren und inneren Einspannteilen (4, 5) entnommen wird und die ersten und zweiten geraden Abschnitte (1a, 1e) in eine Anzahl von ringförmig angeordneten Schlitzen (21), die sich über die axiale Länge des Läuferkerns (20) erstrecken, eingesetzt werden, wobei die ersten und zweiten geraden Abschnitte (1a, 1e), die sich aus dem Läuferkern (20) erstrecken, mit dem Kommutator (24) verbunden werden.

5. Verfahren nach Anspruch 4, mit dem weiteren Schritt des Anlegens einer relativen Drehbewegung in die umgekehrte Richtung um einen Drehwickel, der kleiner ist als der vorbestimmte Drehwinkel, um dadurch den Radius des Raumes auszudehnen, der durch die innersten Randabschnitte der zurückgedrehten Abschnitte begrenzt wird, bevor die innersten Randabschnitte der zurückgedrehten Abschnitte eingestellt werden.

6. Verfahren nach Anspruch 4, wobei der vorbestimmte Drehwinkel durch die relative Drehbewegung erhalten wird mit den Schritten des Anlegens einer ersten relativen Drehbewegung in eine Richtung um einen ersten Drehwinkel, der größer ist als der vorbestimmte Drehwinkel, une einer zweiten relativen Drehbewegung in der umgekehrten Richtung um einen zweiten Drehwinkel, der die Differenz bildet zwischen dem ersten Drehwinkel und dem vorbestimmten Drehwinkel.

**Revendications**

1. Induit pour moteur comprenant:
un noyau d'induit (20) comprenant plusieurs encoches (21) disposées annulairement sur la totalité de sa longueur axiale,
un arbre rotatif (22) disposé au centre dudit noyau d'induit (20),
un collecteur (24) prévu sur une portion d'extrémité dudit noyau d'induit (20) et monté de façon fixe sur ledit arbre (22), et
un corps de bobinage d'induit intégré (30) comprenant plusieurs portions de bobinage,
chacune desdites portions de bobinage (30) comprenant:
une première portion rectiligne (1a) reliée à l'une de ses extrémités audit collecteur (24) et s'étendant dans l'une desdites encoches (21),
une seconde portion rectiligne (1e) reliée à l'une de ses extrémités audit collecteur (24) et s'étendant dans une autre desdites encoches (21), ladite première portion rectiligne (1a) d'une portion de bobinage et ladite seconde portion rectiligne d'une autre portion de bobinage étant disposées ensemble à l'intérieur de la même encoche (21), ladite première portion rectiligne (1a) de ladite portion de bobinage étant située radialement à l'extérieur de ladite seconde portion rectiligne (1e) de ladite autre portion de bobinage,
caractérisé en ce que
une première portion plate (1f) faisant saillie à l'extérieur de l'autre extrémité de ladite première portion rectiligne (1a) et s'étendant sensiblement à angle droit par rapport à celle-ci en direction de ladite seconde portion rectiligne (1e) et faisant saillie au-delà de l'autre extrémité dudit noyau d'induit de manière que ladite première portion plate (1f) soit adjacente à ladite autre extrémité dudit noyau d'induit (20),
une seconde portion plate (1h) faisant saillie vers l'extérieur de l'autre extrémité et s'étendant sensiblement à angle droit par rapport à ladite seconde portion rectiligne (1e) en direction de ladite première portion rectiligne (1a), et faisant saillie au-delà de ladite autre extrémité dudit noyau d'induit (20), de manière que la distance entre ladite première portion plate (1f) et ladite autre extrémité dudit noyau d'induit (20) soit inférieure à la distance entre ladite seconde portion plate (1h) et ladite autre extrémité dudit noyau d'induit (20), et
une portion retordue (1g) entre lesdites première et seconde portions plates (1f, 1h), ce par quoi lesdites première et seconde portions plates (1f, 1h) de portions de bobinage différentes sont en chevauchement et lesdites première et seconde portions plates (1f, 1h) de plusieurs desdites portions de bobinage définissent une surface généralement plate sensiblement parallèle à ladite autre extrémité dudit noyau d'induit (20).

2. Induit pour moteur selon la revendication 1, dans lequel ladite première portion plate (1f) est déplacée par rapport à ladite seconde portion plate (1h) longitudinalement par rapport audit noyau (20) sur une distance égale à environ un diamètre du fil de ladite portion de bobinage.

3. Induit pour moteur selon la revendication 1, dans lequel lesdites portions plates (1f, 1h) sont respectivement agencées et disposées sensiblement selon une relation en spirale d'Archimède par rapport audit arbre (22).

4. Procédé de fabrication d'un induit pour moteur qui comprend:
un noyau d'induit (20) comprenant plusieurs encoches (21) disposées annulairement sur la totalité de sa longueur axiale;
un arbre rotatif (22) monté au centre dudit noyau d'induit (20);
un collecteur (24) prévu sur une portion d'extrémité dudit noyau d'induit (20) et monté de façon fixe sur ledit arbre (22); et

un corps de bobinage d'induit intégér (30) comprenant plusieurs portions de bobinage, ce par quoi un fil conducteur rectiligne (1) de longueur prédéterminée est plié,

le pliage excentrique dans une position proche du milieu du fil conducteur rectiligne (1) ayant une longueur prédéterminée pour former une portion de retour et une première et une seconde portions rectilignes (1a, 1e), lesdites première et seconde portions rectilignes (1a, 1e) s'éloignant l'une de l'autre en formant un angle d'un nombre donné de degrés;

caractérisé par l'insertion desdites première et seconde portions rectilignes (1a, 1e) du nombre nécessaire desdits fils conducteurs (1) pliés excentriquement dans un nombre correspondant d'encoches constituées à la fois par un gabarit cylindrique rotatif externe (4) et par un garbarit cylindrique interne (5) disposé dans ledit garbarit externe (4) pour les placer dans les positions de encoches, lesdits fils conducteurs étant ainsi disposés radialement alors que les portions de retour des fils conducteurs provoquées par la flexion excentrique étant disposées à l'intérieur par rapport au centre du gabarit interne (5);

niveler les portions de bord le plus à l'intérieur desdites portions de retour en insérant un organe à l'intérieur;

appliquer la pression à la portion supérieur de ladite portion de retour de chacun desdits fils conducteurs (1);

suite à quoi un mouvement de rotation relatif entre les gabarits cylindriques externe et interne (4, 5) est appliqué dans un sens sur un angle de rotation prédéterminé pour réaliser un corps de bobinage d'induit intégré (30), chacune des portions de retour des fils conducteurs (1) étant transformée en une première portion sensiblement plate (1f) et une seconde portion sensiblement plate (1h) communiquant avec ladite première portion sensiblement plate (1f) par l'intermédiaire d'une portion coudée (1g) située entre elles, lesdites première et seconde portions sensiblement plates (1f, 1h) de fils conducteurs différents (1) se chevauchant, lesdites première et seconde portions plates (1f, 1h) étant disposées respectivement sensiblement selon une relation de spirale d'Archimède;

transférer ensuite ledit corps de bobinage d'induit intégré (30) desdits gabarits externe et interne (4, 5) et insérer lesdites première et second portions rectilignes (1a, 1e) dans plusieurs encoches (21) disposées annulairement sur la totalité de la longeur axiale du noyau d'induit (20), lesdites premières et seconde portions rectilignes (1a, 1e) qui s'étendent hors du noyau d'induit (20) étant reliées au collecteur (24).

5. Procédé selon la revendication 4, comprenant en outre l'étape consistant à:

appliquer un mouvement de rotation relatif dans le sens inverse et sur un angle de rotation plus petit que ledit angle de rotation prédéterminé de façon à augmenter le rayon de l'espace défini par les portions de bord le plus à l'intérieur. desdites portions de retour avant de niveler les portions de bord le plus à l'intérieur desdites portions de retour.

6. Procédé selon la revendication 4, dans lequel ledit angle de rotation prédéterminé qui est obtenu par ledit mouvement de rotation relatif comprend les étapes consistant à:

appliquer un premier mouvement de rotation relative dans un sens sur un premier angle de rotation supérieur audit angle de rotation prédéterminé, et

appliquer un second mouvement de rotation relatif en sens inverse et selon un second angle de rotation constitué par la différence entre ledit premier angle de rotation et ledit angle de rotation prédéterminé.

# F I G. 1

# FIG. 2.

# FIG. 3

# FIG. 4

(a)

(b)

(c)

(d)

# FIG. 5

## (a)

## (b)

FIG. 6

FIG. 7

FIG. 8

# F I G. 9

# F I G. 10